(19) Europäisches Patentamt
European Patent Office
Office européen des brevets

(11) **EP 3 147 184 B1**

(12) **EUROPEAN PATENT SPECIFICATION**

(45) Date of publication and mention
of the grant of the patent:
**01.08.2018  Bulletin 2018/31**

(51) Int Cl.:
**B62D 25/06** *(2006.01)*       **B62D 35/00** *(2006.01)*

(21) Application number: **16190606.0**

(22) Date of filing: **26.09.2016**

(54) **AERODYNAMIC VEHICLE STRUCTURE**

AERODYNAMISCHE FAHRZEUGSTRUKTUR

STRUCTURE DE VÉHICULE AÉRODYNAMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.09.2015  GB 201516924**

(43) Date of publication of application:
**29.03.2017   Bulletin 2017/13**

(73) Proprietor: **Nissan Motor Manufacturing (UK) Ltd
Bedford
Bedfordshire MK43 0DB (GB)**

(72) Inventors:
• **KREMHELLER, Andreas
Bedford, Bedfordshire MK430DB (GB)**
• **MOORE, Magnus
Bedford, MK430DB (GB)**
• **LE GOOD, Geoff
Northwich, Cheshire CW9 8WD (GB)**
• **ANNETTS, Ivor
Brackley, Northamptonshire NN137UG (GB)**

(56) References cited:
**DE-A1- 19 944 953     FR-A5- 2 102 587
US-S1- D 613 204**

**Description**

TECHNICAL FIELD

The present disclosure relates to an aerodynamic vehicle structure and particularly, but not exclusively, to an aerodynamic roof and front end structure for a vehicle, in particular a light commercial vehicle.

BACKGROUND

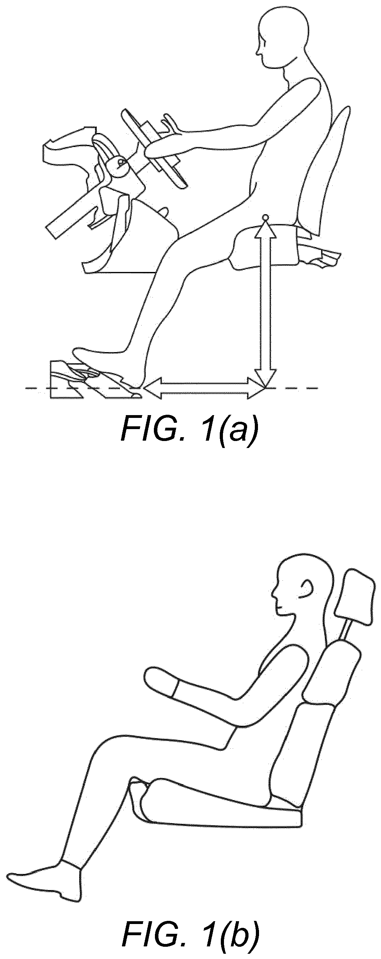

Light commercial vehicles (LCVs), also referred to as light goods vehicles, typically have tall cabins to provide the driver with good visibility and seating position, e.g. upright driving positions. For example, the driver may have an upright driving position (as shown in Figure 1(a)) that is more upright compared to driving positions (as shown in Figure 1(b)) found in regular vehicles including LCVs. However, tall cabins increase the frontal area of LCVs which increases the aerodynamic drag force on the vehicle. Drag force may be expressed by the drag equation as is known in the art:

$$F_D = \frac{1}{2} \times \rho \times A \times v^2 \times C_D$$

where:

    ρ is the air density;
    A is the frontal area of the vehicle;
    v is the vehicle velocity relative to the air; and
    $C_D$ is the drag coefficient of the vehicle.

Accordingly, for a given frontal area, vehicle velocity and air density, the drag force on the vehicle may be reduced by reducing the drag coefficient of the vehicle. It is desirable to improve aerodynamic performance of an LCV and thus improve fuel efficiency and lower operating costs of such vehicles.

The aerodynamic performance, specifically the drag coefficient of LCVs is affected by the pressure drag on the vehicle which is dominated by two main features: the magnitude of the pressure exerted on the front of the vehicle, and the separated flow regime emanating from the base area of the vehicle due to the interaction with the base flow wake. Additionally, airflow over the top of the vehicle can adversely affect performance in the case of flow separation and the presence of an adverse pressure gradient.

Aerodynamic devices may be added to LCVs, for example cabin mounted deflectors or added bodywork on top of a cabin, which can improve streamlining and reduce the drag coefficient. However, such solutions may not always be practical, for example, where the added space required by the additional body work/deflectors is required for cargo space and/or cabin headroom space.

Roof slope shape has significant effect on vehicle aerodynamics for high cabin heights. For example, WO2008125863 discusses a trailer for a heavy goods vehicle with a cambered roof profile. However, such profiles still result in significant rear wake while deepening the camber restricts cargo space and also the size of cargo doors needed to access the cargo space.

USD 613204 discloses another vehicle design with a sloped roof. DE 19944953 discloses a design for a recreational with an extendable roof. Neither document discloses how to extract maximum aerodynamic advantage for that evhcile size and shape.

Typically, on sedan (also known as saloon) vehicles, the drag coefficient can be reduced by application of camber to the roof in the longitudinal direction and maintaining sufficiently large bend radii with corresponding small pressure gradients so as to avoid flow separation. For LCVs which have an abrupt end of the roof line, the slope will influence the angles and direction of the wake generated behind the vehicle. For LCVs it is often not practical create beneficial aerodynamic features such as long, rounded forebodies; in particular if the LCV profile has a tall cabin with steep windshield and hood angles.

However, such profiles still result in significant rear wake while deepening the camber restricts cargo space and also the size of cargo doors needed to access the cargo space. Edges on front end vehicle structures (such as front grilles, headlights or the hood) can cause undesirable effects, e.g. at the hood edge. The front end of tall vehicles such as LCVs can have a significant effect on the drag coefficient of the vehicle. Front spoilers (i.e. air dams and splitters) can be attached to improve airflow and reduce drag, but can be impractical to deploy on LCVs as they restrict ground clearance and hamper accessibility.

It desirable to improve aerodynamic efficiency of LCVs while preserving cabin headroom space and/or cargo space. The present invention has been devised to mitigate or overcome at least some of the above-mentioned problems.

SUMMARY OF THE INVENTION

According to an aspect of the present invention there is provided a light commercial vehicle comprising a roof structure and a front end structure, wherein the roof structure, which has a roof length between a front edge and a rear edge, comprises: a convex portion extending in a rearward direction from the front edge; a concave portion located rearwards of the convex portion; and a substantially flat portion located rearwards of the concave portion to the rear edge; wherein the convex portion has a length that is approximately 40% to 60% of the roof length, the concave portion has a length that is approximately 30% to 50% of the roof length and the substantially flat portion has a length that is approximately 10% to 20% of the roof length. The front end structure comprises an upper portion including a windscreen portion; a lower portion located below the upper portion, the lower portion including a hood portion; and an upstanding portion between the upper portion and the lower portion, wherein the height of the upstanding portion has a height that is 20% to 30% of the height of the upper portion; wherein the convex portion of the roof structure extends in a rearward direction from the top of the windscreen portion of the front end structure.

The roof structure has a reflex camber shape which has the effect of smoothing airflow over the roof structure to keep the boundary layer attached. Further, the shape of the roof structure balances the rear wake from the vehicle, increasing aerodynamic efficiency. The convex portion smooths airflow and increases the momentum of the airflow across the roof of the vehicle, increasing aerodynamic efficiency. The straight roof trailing edge configuration was shown to elevate the rear wake upwards vertically with a smaller amount of pressure variation on the rear end. Notably, the straight roof trailing edge occurs begins towards the rear of the roof. A balanced rear wake is an indication for base pressure increase and hence reduced drag. Reduced pressure variation on the rear is also an indication for reduced wind noise on the rear door (caused by aerodynamic flow excitation). The combined effect optimises aerodynamic performance for vehicles with tall front cabin while maintaining internal cargo space capability (i.e. storage volume) and cargo space accessibility (i.e. door size opening to cargo space).

The front end structure improves the aerodynamics of the vehicle which may have a raised cabin and corresponding increased frontal area, for example, as a result of an upright driving position. Accordingly, the fuel efficiency of the vehicle can be improved for the vehicle. Further, a cargo area of the vehicle may be increased due to the increased vehicle height behind the cabin.

In particular, the upstanding portion accelerates airflow around the front corners of the front end structure (and hence the front of the vehicle) and generates thrust. This mechanism enhances the momentum of the flow and increases base pressure, a key requirement for drag reduction.

In some example configurations of the front end structure, the drag coefficient can be reduced by 0.003 compared to an equivalent front end structure without the upstanding portion.

Optionally, the convex portion comprises a maximum height location of the vehicle.

Optionally, the maximum height location is substantially located over the driver's cabin position.

Optionally, the distance from the lowest part of the roof structure to the maximum height is approximately 15% of the distance from the base of the vehicle to the maximum height.

The vehicle may have a windscreen, and the front edge of the roof structure may be arranged to substantially conform to an angle of inclination of the windscreen.

Optionally, the transition between the convex portion and the concave portion is smooth.

Optionally, the transition between the concave portion and the substantially flat portion is smooth.

Optionally, the transition between the concave portion and the substantially flat portion is smooth.

Optionally, the roof structure comprises sides which taper upwardly to reduce the width of the roof structure.

Optionally, a rear edge of the roof structure comprises a flange, which may be similar to a rear spoiler.

BRIEF DESCRIPTION OF THE DRAWINGS

Figures 1(a) and 1(b) have already been described above by way of background, in which:

Figure 1(a) is a schematic side view of an upright driving position; and

Figure 1(b) is a schematic side view of a conventional driving position.

One or more embodiments of the invention will now be described, by way of example only, with reference to the remaining drawings, in which:

Figure 2(a) is a front oblique view of a vehicle according to an embodiment of the present invention;

Figure 2(d) is a top view of the vehicle of Figure 2(a);

Figure 2(e) is a front view of the vehicle of Figure 2(a);

Figure 2(f) is a rear view of the vehicle of Figure 2(a);

Figure 3 is a side view of a vehicle according to another embodiment of the present invention;

Figure 4 is a side view of a vehicle according to another embodiment of the present invention;

Figure 5(a) is a front oblique view of a vehicle according to another embodiment of the present invention;

Figure 5(b) is a rear oblique view of the vehicle of Figure 5(a); and

Figure 5(c) is a side view of the vehicle of Figure 5(a).

DETAILED DESCRIPTION

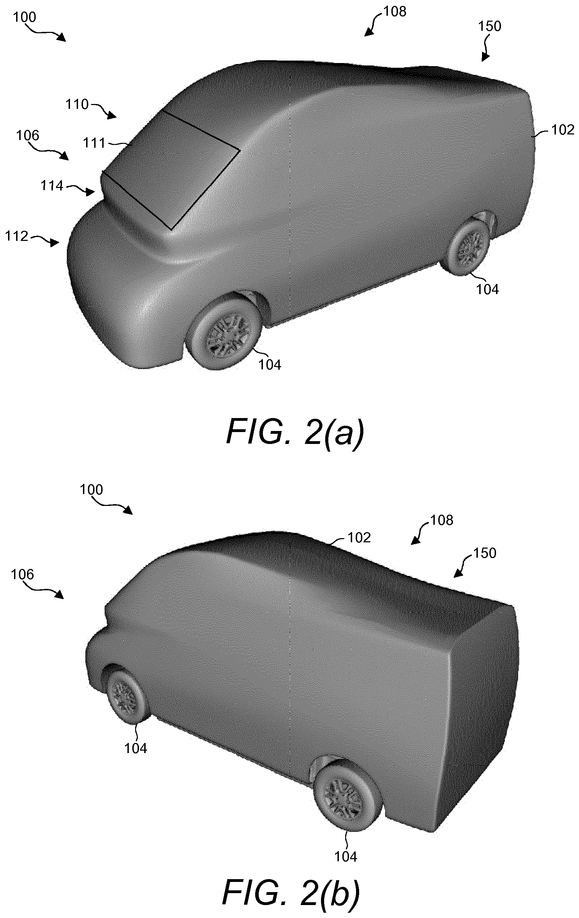

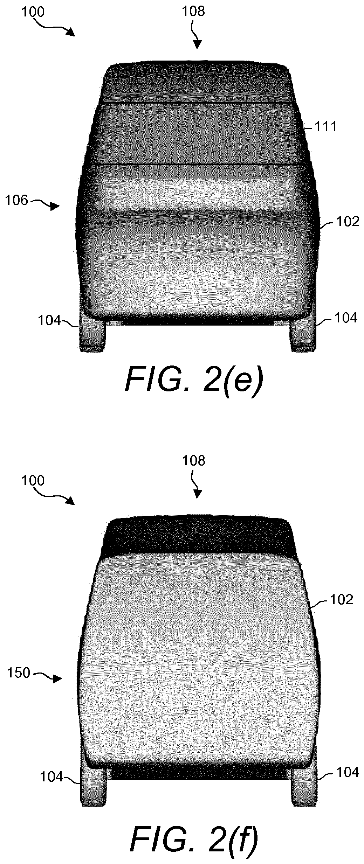

Figures 2(a) to 2(f) show different views of a vehicle 100 according to an embodiment of the present invention. The vehicle 100 is a Light Commercial Vehicle (LCV) and comprises a body 102 and four wheels 104. The body 102 includes a front end structure 106 and a roof structure 108. A cabin of the vehicle may be arranged for occupants to be seated in an upright position, for example as shown in Figure 1(a).

The front end structure 106 comprises a windscreen portion 110, a hood portion 112 and an upstanding portion 114. A vehicle windscreen 111 is located in the windscreen portion 110, enabling vehicle occupants to see outside. A vehicle hood (i.e. bonnet) and grille (not shown) are located in the hood portion 112, which allow access to an engine bay and provide an air intake, respectively.

The upstanding portion 114 is arranged between the windscreen portion 110 and the hood portion 112 such that the upstanding portion 114 creates a substantially vertical step from the hood portion 114 up to the windscreen portion 110. The upstanding portion 114 is substantially perpendicular to the forwards direction of the vehicle 100 and extends across the front end structure 106.

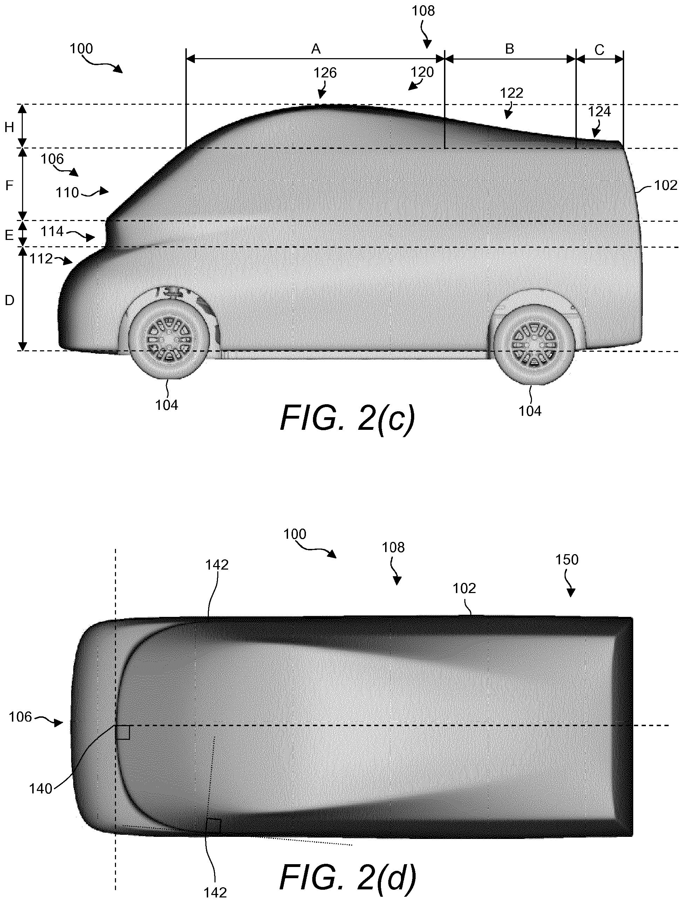

Figure 2(d) shows a top view of the vehicle 100 showing the upstanding portion 114 blends smoothly around to the sides of the vehicle 100. A front apex 140 of the upstanding portion 114 is tangential to a front of the vehicle body 102, where the front of the vehicle body 102 is substantially perpendicular to the forward direction of travel of the vehicle 100. From the front apex 140, the upstanding portion curves smoothly outwards and rearwards in both directions to define side corners 142 which are each tangential to the sides of the vehicle body 102, where the sides of the vehicle body 102 are substantially in the forward direction of travel of the vehicle 100.

The shape of the upstanding portion 114 around the sides of the body 102 acts to minimise the size of any vortices that may be generated from the upstanding portion 114. Reducing the size of the vortices has the benefit of reducing the drag on the vehicle 100.

The roof structure 108 comprises a convex portion 120, a concave portion 122 and a substantially flat portion 124. The convex portion 120 extends in a rearward direction from the top of the windscreen portion 110.

The concave portion 122 is located rearwards of the convex portion 120 and the substantially flat portion 124 located rearwards of the concave portion 120 to the rear edge of the vehicle 100. In other words, the roof structure 108 has a reflex camber profile.

Around the middle of the concave portion 120 in a rearward direction, the concave portion 120 reaches a maximum height location 126. The maximum height location 126 is substantially over a passenger cabin of the vehicle 100 where a driver of the vehicle is located. The convex portion 120 and the substantially flat portion 124 form the part of the roof structure over a rear portion 150 of the vehicle 100. For example, the rear portion 150 may comprise a cargo area of the LCV.

The sides of the vehicle 100 in the rear portion 150 taper towards the roof structure 108 such that the width of the vehicle reduces towards the roof structure. The tapered sides and the reflex camber profile of the roof structure 108 each act to reduce the rear area of the body 102 to decrease the size of the airflow wake.

Figure 2(c) shows a side view of the vehicle 100. In particular, regarding the roof structure 108, the convex portion 120 is shown labelled as region A, the concave portion 122 is shown labelled as region B and the substantially flat portion 124 is shown labelled as region C. Regarding the front end structure 106, the hood portion 112 is shown labelled as region D (i.e. from the bottom of the body 102 to bottom of the upstanding portion 114), the upstanding portion 114 is shown labelled as region E, and the windscreen portion 110 is shown labelled as region F. The maximum height of the roof structure 108, between the top of the windscreen portion 110 to the maximum height location 126 is shown labelled as region H.

The region A of the convex portion 120 has a length that is approximately 60% of the total length of the roof structure 108 (i.e. the total length of region A, region B and region C added together). The region B of the concave portion 122 has a length that is approximately 30% of the total length of the roof structure 108. The region C of the substantially flat portion 124 has a length that is approximately 10% of the total length of the roof structure 108.

In other embodiments, the region A of the convex portion 120 may have a length that is approximately 40% to 60% of the total length of the roof structure 108, the region B of the concave portion 122 may have a length that is approximately 30% to 50% of the total length of the roof structure 108, and the region C of the substantially flat portion 124 may have a length that is approximately 10% to 20% of the total length of the roof structure 108.

The maximum height location 126 of the convex portion 120 provides a tall vehicle cabin to provide the driver with good visibility and seating position. Rearwards of the maximum height location 126, the shape of the convex portion 120 acts to keep the boundary layer of the airflow over the roof structure 108 attached. This prevents turbulence which would increase drag on the vehicle 100 when the vehicle is in motion. The concave portion 122 and the substantially flat portion 124 also act to keep the boundary layer attached over the roof structure 108. The shape of the substantially flat portion 124 reduces the size of the airflow wake behind the vehicle 100 to reduce the drag when the vehicle 100 is in motion.

The region D of the hood portion 112 has a height that is approximately 40% of the total height of the body 102 (i.e. the total length of region D, region E, region F and region H added together). The region E of the upstanding portion 114 has a height that is approximately 30% of the height of region F of the windscreen portion 110, and approximately 10% of the total height of the body 102. The region F of the windscreen portion 110 has a height that is approximately 30% of the total height of the body 102. The region H has a height that is approximately 20% of the total height of the body 102.

In other embodiments, the region D of the hood portion 112 may have a height that is approximately 30% to 50% of the total height of the body 102, the region E of the upstanding portion 114 may have a height that is approximately 5% to 20% of the total height of the body 102, the region F of the windscreen portion 110 may have a height that is approximately 20% to 40% of the total height of the body 102, and the region H may have a height that is approximately 5% to 30% of the total height of the body 102.

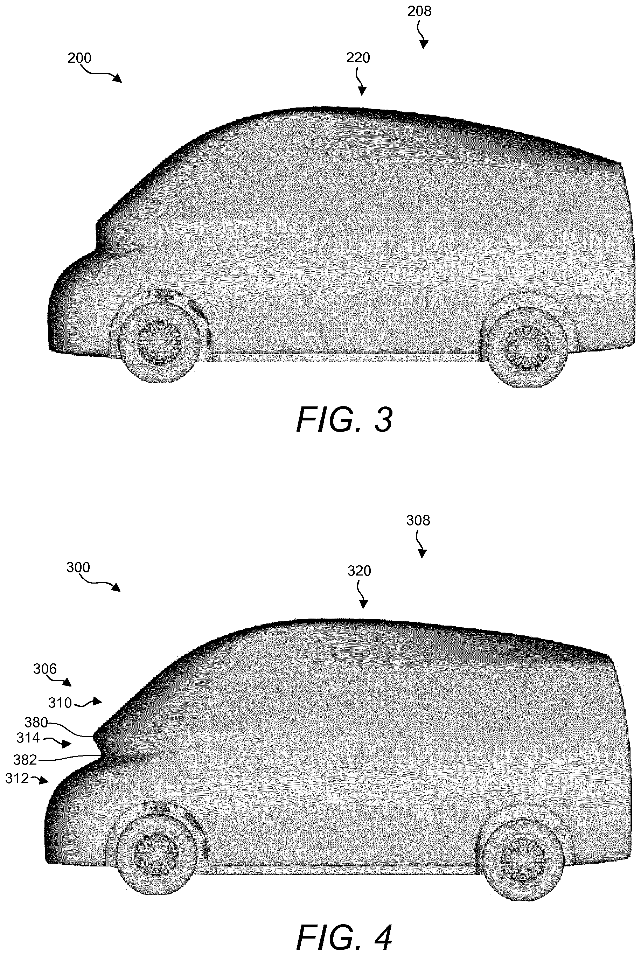

Figure 3 shows a side view of a vehicle 200 according to an embodiment of the present invention. The vehicle 200 is substantially the same as the vehicle 100, and comprises a roof structure 208 having a convex portion 220. In particular, the vehicle 200 of this embodiment does not comprise a concave portion or a substantially flat portion compared to the vehicle 100. Instead, the convex portion 220 simply declines continuously towards the rear of the vehicle body. The arrangement of the roof structure 208 acts to keep the boundary layer of the airflow attached when the vehicle 200 is in motion, in order to reduce the drag.

Figure 4 shows a side view of a vehicle 300 according to an embodiment of the present invention. The vehicle 300 is substantially the same as the vehicle 100, and comprises a front end structure 306 and a roof structure 308. The roof structure 308 includes a convex portion 320. In particular, the vehicle 300 of this embodiment does not comprise a concave portion or a substantially flat portion compared to the vehicle 100. The front end structure 306 comprises a windscreen portion 310, a hood portion 312 and an upstanding portion 314. The windscreen portion 310 and the hood portion 312 are substantially the same as of the vehicle 100. The upstanding portion 314 has an upper edge 380 and a lower edge 382. In the vehicle 300, the lower edge 382 is further rearward than the upper edge 380, having an angle of approximately 10 to 20 degrees forward from the vertical.

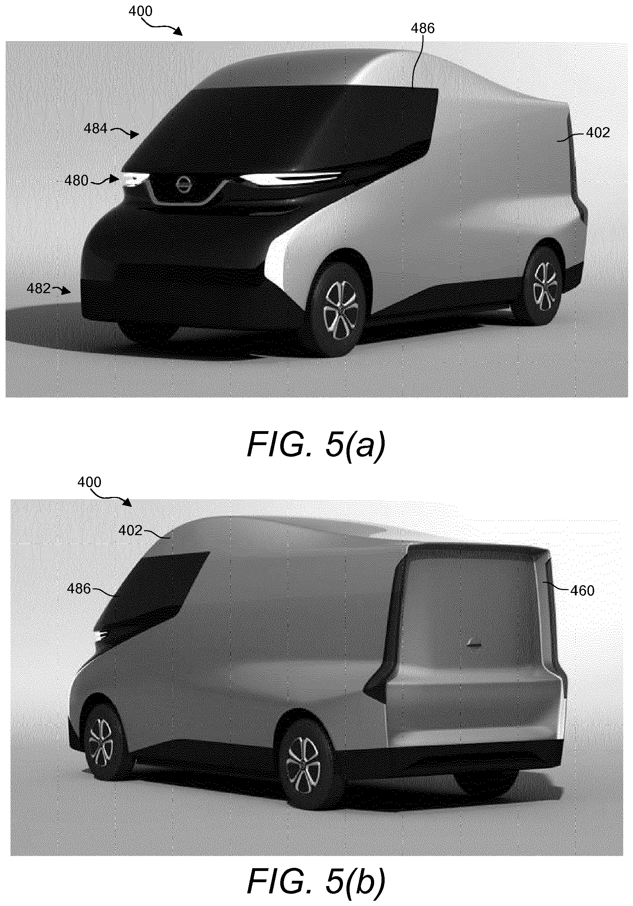

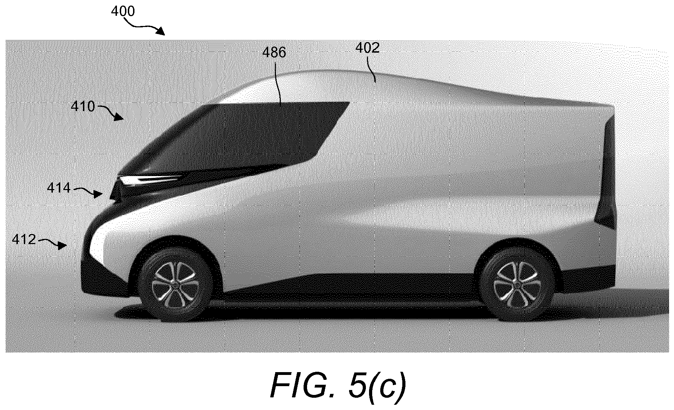

Figures 5(a) to 5(c) show different views of a vehicle 400 according to an embodiment of the present invention. The vehicle 400 is substantially the same as the vehicle 100, although the outer surface of the vehicle 400 is shown with more detail such as headlights 480, a central front grille 482, a front windscreen 484 and side windows 486. The front windscreen 484 is located in a windscreen portion 410, the central front grille 482 is located in a hood portion 412, and the headlights are located in an upstanding portion 414

The vehicle 400 comprises a body 402 comprising flanges 460 at the rear edge across the top and sides of the body 402. The flanges 460 act to extend the effective length of the vehicle 400 and reduce the effective rear area of the body 402 to reduce the size of the turbulent wake behind the vehicle compared to an equivalent vehicle without the flanges 460.

In the vehicle 400, the upstanding portion 414 blends around the sides of the body 402 to define a crease that extends rearwardly and upwardly below each side window 486. Upper and lower edges of the crease taper together rearwardly.

Many modifications may be made to the above examples without departing from the scope of the present invention as defined in the accompanying claims.

**Claims**

1. A light commercial vehicle (100) comprising a roof structure (108) and a front end structure (106), wherein the roof structure, which has a roof length between a front edge and a rear edge, comprises:

a convex portion (120) extending in a rearward direction from the front edge;
a concave portion (122) located rearwards of the convex portion; and
a substantially flat portion (124) located rearwards of the concave portion to the rear edge; **characterised in that** wherein the convex portion has a length that is approximately 40% to 60% of the roof length, the concave portion has a length that is approximately 30% to 50% of the roof length and the substantially flat portion has a length that is approximately 10% to 20% of the roof length; and

wherein the front end structure (108) comprises:

an upper portion including a windscreen portion (110);
a lower portion located below the upper portion, the lower portion including a hood portion (112); and
an upstanding portion (114) between the upper portion and the lower portion, wherein the height of the upstanding portion has a height that is 20% to 30% of the height of the upper portion;
wherein the convex portion (120) of the roof structure (108) extends in a rearward direction from the top of the windscreen portion (110) of the front end structure.

2. The light commercial vehicle (100) of claim 1, wherein the convex portion (120) comprises a maximum height location (126) of the vehicle.

3. The light commercial vehicle (100) of claim 2, wherein the maximum height location (126) is substantially located over the driver's cabin position.

**4.** The light commercial vehicle (100) of claims 2 or 3, wherein the distance from the lowest part of the roof structure to the maximum height is approximately 15% of the distance from the base of the vehicle to the maximum height.

**5.** The light commercial vehicle (100) of any preceding claim, wherein the front edge of the roof structure is arranged to substantially conform to an angle of inclination of the windscreen portion (110).

**6.** The light commercial vehicle (100) of any preceding claim, wherein the transition between the convex portion (120) and the concave portion (122) is smooth.

**7.** The light commercial vehicle (100) of any preceding claim, wherein the transition between the concave portion (122) and the substantially flat portion (124) is smooth.

**8.** The light commercial vehicle (100) of any preceding claim, wherein the roof structure (108) comprises sides which taper upwardly to reduce the width of the roof structure.

**9.** The light commercial vehicle (100) of any preceding claim, wherein a rear edge of the roof structure (108) comprises a flange (460).

**Patentansprüche**

**1.** Leichtes Nutzfahrzeug (100) mit einer Dachstruktur (108) und einer Vorderendstruktur (106), wobei die Dachstruktur, die eine Dachlänge zwischen einer Vorderkante und einer Hinterkante aufweist, Folgendes umfasst:

einen konvexen Bereich (120), der sich in einer Rückwärtsrichtung von der Vorderkante erstreckt;
einen konkaven Bereich (122), der hinter dem konvexen Bereich angeordnet ist; und einen im Wesentlichen ebenen Bereich (124), der hinter dem konkaven Bereich bis zur Hinterkante angeordnet ist;
**dadurch gekennzeichnet, dass** der konvexe Bereich eine Länge aufweist, die ungefähr 40 % bis 60 % der Dachlänge beträgt, dass der konkave Bereich eine Länge aufweist, die ungefähr 30 % bis 50 % der Dachlänge beträgt, und dass der im Wesentlichen ebene Bereich eine Länge aufweist, die ungefähr 10 % bis 20 % der Dachlänge beträgt; und
wobei die Vorderendstruktur (108) Folgendes umfasst:

einen oberen Bereich mit einem Windschutzscheibenbereich (110);
einen unteren Bereich, der sich unter dem oberen Bereich befindet, wobei der untere Bereich einen Haubenbereich (112) umfasst; und
einen senkrechten Bereich (114) zwischen dem oberen Bereich und dem unteren Bereich, wobei der senkrechte Bereich eine Höhe aufweist, die 20 % bis 30 % der Höhe des oberen Bereichs beträgt;
wobei der konvexe Bereich (120) der Dachstruktur (108) sich in einer Rückwärtsrichtung vom oberen Teil des Windschutzscheibenbereichs (110) der Vorderendstruktur erstreckt.

**2.** Leichtes Nutzfahrzeug (100) nach Anspruch 1, wobei der konvexe Bereich (120) eine Stelle der Maximalhöhe (126) des Fahrzeugs umfasst.

**3.** Leichtes Nutzfahrzeug (100) nach Anspruch 2, wobei die Stelle der Maximalhöhe (126) sich im Wesentlichen über der Position der Fahrerkabine befindet.

**4.** Leichtes Nutzfahrzeug (100) nach Anspruch 2 oder 3, wobei der Abstand vom untersten Teil der Dachstruktur bis zur Maximalhöhe ungefähr 15 % des Abstands von der Basis des Fahrzeugs bis zur Maximalhöhe beträgt.

**5.** Leichtes Nutzfahrzeug (100) nach einem vorhergehenden Anspruch, wobei die Vorderkante der Dachstruktur derart ausgebildet ist, dass sie im Wesentlichen einem Neigungswinkel des Windschutzscheibenbereichs (110) entspricht.

**6.** Leichtes Nutzfahrzeug (100) nach einem vorhergehenden Anspruch, wobei der Übergang zwischen dem konvexen Bereich (120) und dem konkaven Bereich (122) stufenlos ist.

**7.** Leichtes Nutzfahrzeug (100) nach einem vorhergehenden Anspruch, wobei der Übergang zwischen dem konkaven Bereich (122) und dem im Wesentlichen ebenen Bereich (124) stufenlos ist.

**8.** Leichtes Nutzfahrzeug (100) nach einem vorhergehenden Anspruch, wobei die Dachstruktur (108) Seiten umfasst, die nach oben aufeinander zulaufen, um die Breite der Dachstruktur zu verringern.

**9.** Leichtes Nutzfahrzeug (100) nach einem vorhergehenden Anspruch, wobei eine Hinterkante der Dachstruktur (108) einen Flansch (460) umfasst.

## Revendications

1. Véhicule utilitaire léger (100) comprenant une structure de toit (108) et une structure d'extrémité avant (106), la structure de toit, qui a une longueur de toit entre un bord avant et un bord arrière, comprenant :

   une partie convexe (120) qui s'étend dans une direction arrière à partir du bord avant ;
   une partie concave (122) située à l'arrière de la partie convexe ; et
   une partie sensiblement plate (124) située à l'arrière de la partie concave par rapport au bord arrière ;
   **caractérisé en ce que** la partie convexe a une longueur qui représente environ 40 % à 60 % de la longueur du toit, la partie concave a une longueur qui représente environ 30 % à 50 % de la longueur de toit et la partie sensiblement plate a une longueur qui représente environ 10 % à 20 % de la longueur de toit ; et
   la structure d'extrémité avant (108) comprenant :

      une partie supérieure comprenant une partie de pare-brise (110) ;
      une partie inférieure située en dessous de la partie supérieure, la partie inférieure comprenant une partie de capot (112) ; et
      une partie verticale (114) entre la partie supérieure et la partie inférieure, la hauteur de la partie verticale ayant une hauteur qui représente 20 % à 30 % de la hauteur de la partie supérieure ;
      la partie convexe (120) de la structure de toit (108) s'étendant dans une direction arrière à partir de la partie supérieure de la partie de pare-brise (110) de la structure d'extrémité avant.

2. Véhicule utilitaire léger (100) selon la revendication 1, la partie convexe (120) comprenant un emplacement de hauteur maximum (126) du véhicule.

3. Véhicule utilitaire léger (100) selon la revendication 2, l'emplacement de hauteur maximum (126) étant sensiblement situé au-dessus de la position de la cabine de conduite.

4. Véhicule utilitaire léger (100) selon la revendication 2 ou 3, la distance entre la partie inférieure de la structure de toit et la hauteur maximum représente environ 15 % de la distance entre la base du véhicule et la hauteur maximum.

5. Véhicule utilitaire léger (100) selon l'une quelconque des revendications précédentes, le bord avant de la structure de toit étant agencé pour s'adapter sensiblement à un angle d'inclinaison de la partie de pare-brise (110).

6. Véhicule utilitaire léger (100) selon l'une quelconque des revendications précédentes, dans lequel la transition entre la partie convexe (120) et la partie concave (122) est harmonieuse.

7. Véhicule utilitaire léger (100) selon l'une quelconque des revendications précédentes, dans lequel la transition entre la partie concave (122) et la partie sensiblement plate (124) est harmonieuse.

8. Véhicule utilitaire léger (100) selon l'une quelconque des revendications précédentes, dans lequel la structure de toit (108) comprend des côtés qui s'effilent vers le haut pour réduire la largeur de la structure de toit.

9. Véhicule utilitaire léger (100) selon l'une quelconque des revendications précédentes, dans lequel un bord arrière de la structure de toit (108) comprend un rebord (460).

FIG. 1(a)

FIG. 1(b)

FIG. 2(a)

FIG. 2(b)

FIG. 2(c)

FIG. 2(d)

FIG. 2(e)

FIG. 2(f)

FIG. 3

FIG. 4

FIG. 5(a)

FIG. 5(b)

FIG. 5(c)

**EP 3 147 184 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008125863 A
- DE 19944953